# EUROPÄISCHE PATENTSCHRIFT

(11) **EP 0 782 666 B1**
(45) Veröffentlichungstag und Bekanntmachung des Hinweises auf die Patenterteilung: **05.08.1998**
(21) Anmeldenummer: 95932769.3
(22) Anmeldetag: 18.09.1995
(51) Int. Cl.: F02F 7/00, F01P 5/10, F01M 1/02

(54) **KOMBINATIONSGEHÄUSE**
COMBINATION HOUSING
CARTER COMBINE

(30) Priorität: 19.09.1994 DE 4433247; 19.09.1994 DE 4433277
(43) Veröffentlichungstag der Anmeldung: 09.07.1997
(73) Patentinhaber: MOTOREN-WERKE MANNHEIM AG, D-68167 Mannheim (DE)
(72) Erfinder: HITZIGER, Hubert, D-67549 Worms (DE); WEICKEL, Hans, D-68307 Mannheim (DE); WINTER, Norbert, D-68309 Mannheim (DE)
(74) Vertreter: Nau, Walter, Dipl.-Ing.
(86) Internationale Anmeldenummer: EP9503659
(87) Internationale Veröffentlichungsnummer: WO9609468

(56) Entgegenhaltungen:
- EP-A- 0 505 346
- DE-A- 3 048 449
- DE-A- 4 214 799
- FR-A- 496 043

## Beschreibung

Die Erfindung betrifft eine Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder bewegbar ist, wobei an der der Schwungradseite der Brennkraftmaschine gegenüberliegenden Stirnseite ein Aggregateträger angeordnet ist, der eine Kühlflüssigkeitspumpe und eine Ölpumpe trägt.

Eine derartige Brennkraftmaschine ist aus der DE-OS 42 14 799 bekannt. Diese Brennkraftmaschine weist einen Aggregateträger auf, in den eine Schmierölpumpe und eine Kühlflüssigkeitspumpe eingebaut sind. Dabei wird die Kühlflüssigkeitspumpe mitsamt ihrem Gehäuse in eine Öffnung in dem Aggregateträger eingesetzt und gegenüber dieser Öffnung abgedichtet. Die in dem Aggregateträger ebenfalls angeordneten Saug- und Druckleitungen müssen in geeigneter Weise mit den entsprechenden Anschlüssen der Kühlflüssigkeitspumpe verbunden werden und zur Umgebung abgedichtet werden. Die Ölpumpe ist ebenfalls im Inneren des Aggregateträgers befestigt, so daß bei einer Wartung oder Reparatur zunächst der Aggregateträger durch Entfernen eines Deckels geöffnet werden muß, bevor die Ölpumpe zugänglich ist. Dies gilt gleichermaßen für die Kühlflüssigkeitspumpe.

Der Erfindung liegt die Aufgabe zugrunde, eine Brennkraftmaschine bereitzustellen, an der Zusatzaggregate übersichtlich und leicht erreichbar angeordnet sind.

Diese Aufgabe wird dadurch gelöst, daß die Kühlflüssigkeitspumpe und die Ölpumpe extern an dem Aggregateträger angeordnet sind und in dem Aggregateträger zumindest ein Ölverteilkanal und ein Kühlflüssigkeitsverteilkanal angeordnet sind. Durch diese Ausbildung wird eine gute Zugänglichkeit dieser Zusatzaggregate erreicht, so daß der Montageaufwand zur Wartung oder Reparatur verringert ist. Dabei sind beide Pumpen so an dem Aggregateträger montiert, daß die Antriebszahnräder für die beiden Pumpen durch Öffnungen in dem Aggregateträger in dessen Innenraum hineingeführt sind. Im Innenraum kämmen die Antriebszahnräder direkt oder unter Einschaltung eines Zwischenzahnrades mit einem auf der Kurbelwelle montierten Antriebszahnrad. In dem Aggregateträger sind weiterhin ein Ölverteilkanal und ein Kühlflüssigkeitsverteilkanal angeordnet. Diese Kanäle bedürfen keiner Wartung und somit keiner Zugänglichkeit, so daß diese sinnvoll in dem Aggregateträger eingelassen werden können.

In Weiterbildung der Erfindung ist an der Ölpumpe eine externe Ansaugleitung angeschlossen, die in einem Saugrohranschluß einer Ölwanne mündet. Diese Ölwanne kann eine externe Ölwanne in Form eines geschlossenen Behälters sein oder aber bevorzugt eine unterhalb des Kurbelgehäuses direkt an der Brennkraftmaschine montierte Ölwanne. Durch diese Ausbildung ist eine sehr gute Zugänglichkeit des gesamten Ansaugtraktes der Ölversorgung der Brennkraftmaschine sichergestellt. In Weiterbildung der Erfindung weist die Ölpumpe einen externen Druckanschluß auf, der mit einem über eine Bypassleitung umgehbaren Ölwärmetauscher und einer Ölfiltereinrichtung verbunden ist, wobei die Ölfiltereinrichtung über eine Verbindungsleitung mit einem mit dem Ölverteilkanal strömungsverbundenen Einlaßstutzen an dem Aggregateträger verbunden ist. Damit können der Ölwärmetauscher und die Ölfiltereinrichtung problemlos unabhängig von der Brennkraftmaschine an einer geeigneten Stelle angeordnet werden. Dies ist beispielsweise bei Brennkraftmaschinen, die als Lokomotivantrieb eingesetzt werden, von Vorteil, da dann die Ölfiltereinrichtung und der Ölwärmetauscher so in- bzw. an der Lokomotive angeordnet werden, daß diese Bauteile gut zugänglich bzw. zu kühlen sind. Durch den externen Druckanschluß ist ein problemloses Anschließen und Verlegen der Verbindungsleitungen möglich.

In Weiterbildung der Erfindung weist der Ölverteilkanal Anschlüsse für Ölverteilleitungen zu Hauptölverteilkanälen in der Brennkraftmaschine auf. Dabei ist der Ölverteilkanal selbstverständlich auch mit einem Ölanschluß versehen, durch den das gekühlte und gereinigte Öl in den Ölverteilkanal eingespeist wird. Durch diesen Ölverteilkanal in dem Aggregateträger ist folglich eine brennkraftmaschinenfeste Anschlußmöglichkeit für die externen Leitungen geschaffen. Die an den Ölverteilkanal angeschlossene Ölverteilleitungen zu den Hauptölverteilkanälen sind ebenfalls außen an die Brennkraftmaschine angeschraubt. Diese Lösung bietet sich an, da die Hauptölverteilkanäle in den hohl gearbeiteten Nockenwellen angeordnet sind. Dabei zweigen im Bereich der Anschlußstutzen, mit denen die Ölverteilleitungen an der Brennkraftmaschine zum Übergang zu den Hauptölverteilkanälen angeordnet sind, Abzweigungen ab, über die Öl zu den Turboladern der Brennkraftmaschine geführt wird.

In Weiterbildung der Erfindung ist in den Aggregateträger zumindest ein Ölabscheideraum integriert. Dieser Ölabscheideraum ist durch zumindest eine Öffnung in dem Kurbelgehäuse direkt mit dem Kurbelgehäuseinnenraum verbunden.

In Weiterbildung der Erfindung weist der Ölabscheideraum zumindest einen Anschluß für eine Ölabscheideleitung auf. Diese Leitung führt zu einem Beruhigungstopf, in dem sich in den Gasen befindliches und mitgerissenes Öl absetzen kann. Das abgeschiedene Öl wird dann in geeigneter Weise wieder dem Ölkreislauf der Brennkraftmaschine zugeführt.

In Weiterbildung der Erfindung ist in den Aggregateträger ein Schwingungsdämpfergehäuse integriert. Dabei ist dieses Schwingungsdämpfergehäuse vorteilhaft in axialer Verlängerung konzentrisch zu der Kurbelwelle angeordnet, so daß der Schwingungsdämpfer direkt auf der Kurbelwelle befestigbar ist.

In Weiterbildung der Erfindung weist die Kühlflüssigkeitspumpe einen Druckanschluß auf, der mit einem Hauptverteilkanal in der Brennkraftmaschine verbunden ist. Diese Ausbildung stellt wiederrum eine konstruktiv günstige Lösung dar, die einfaches Demontieren der Kühlflüssigkeitspumpe ermöglicht.

In Weiterbildung der Erfindung weist der Kühlflüssigkeitsverteilkanal zumindest einen Auslaß auf, der über einen Rohrstutzen mit einem Ladeluftkühleinlaß verbunden ist. Dabei erfolgt die Zuführung der Kühlflüssigkeit in diesen Kühlflüssigkeitsverteilkanal auch durch den Rohrstutzen, der hierzu eine weitere Öffnung aufweist, an die eine Kühlflüssigkeitszufuhrleitung angeschlossen werden kann.

In Weiterbildung der Erfindung ist in den Aggregateträger ein Kühlflüssigkeitssammelkanal mit zumindest einem Einlaß angeordnet, der über ein Verbindungsstück mit einem Ladeluftkühlauslaß verbunden ist. An diesem Verbindungsstück ist analog zu dem Rohrstutzen ein weiterer Anschluß vorgesehen, der ebenfalls mit dem weiteren Kühlsystem verbunden ist. Durch diesen Anschluß wird die Kühlflüssigkeit in dem Kühlsystem weitergeführt.

In Weiterbildung der Erfindung ist dem Aggregateträger ein Kombinationsträger benachbart, der zumindest einen Ladeluftkühler trägt. Dabei ist in weiterer Ausgestaltung in den Kombinationsträger zumindest ein Verbindungskanal zwischen dem Ladeluftkühler und der Ladeluftleitung der Brennkraftmaschine integriert, so daß von diesem Bauteil zumindest zwei Funktionen erfüllt werden.

In Weiterbildung der Erfindung verläuft ein Hauptölverteilkanal entlang einer Zylinderreihe der Brennkraftmaschine durch die hohl gearbeitete Nockenwelle. Durch diese Ausbildung sind zusätzliche Leitungen oder ein Kanal entlang der Brennkraftmaschinenlängsachse nicht nötig. Die Anordnung und Auslegung des Kurbelgehäuses der Brennkraftmaschine derart, daß in dieser zusätzliche Leitungen angebracht werden und/oder aber in vorhandene Wände ein Kanal eingelassen wird, bedarf zusätzlicher konstruktiver und fertigungstechnischer Bemühungen. Dadurch daß ein Hauptölverteilkanal in der hohl gearbeiteten Nockenwelle verläuft, entfallen diese Probleme, da eine Nockenwelle zumindest bei einer 4-Takt-Brennkraftmaschine vorhanden ist und sich über die gesamte Länge der Brennkraftmaschine erstreckt. Dabei ist aus Festigkeitsgründen auch eine massive Ausgestaltung der Nockenwelle nicht erforderlich, so daß ohne wesentliche konstruktive Anstrengungen die Nockenwelle hohl gearbeitet werden kann, wobei der so durch die Nockenwelle geführte Hauptölverteilkanal einen Durchmesser aufweist, der für die durchzuleitende Ölmenge ausreichend dimensioniert ist.

In Weiterbildung der Erfindung erfolgt der Öleintritt in den Hauptölverteilkanal stirnseitig der Nockenwelle und die Eintrittsseite ist die der Nockenwellenantriebsseite gegenüberliegende Seite. Damit wird für die Ölzuführung in den Hauptölverteilkanal eine konstruktiv einfach zu gestaltende Lösung geschaffen, da dieses Ende der Nockenwelle frei ist und hier problemlos ein Anschlußstutzen angebracht werden kann. Dabei kann der Anschlußstutzen in Form eines außen an dem Kurbelgehäuse der Brennkraftmaschine befestigten und abgedichteten Kniestücks ausgebildet sein, das über entsprechende Verbindungsleitungen mit der Ölpumpe der Brennkraftmaschine verbunden ist. Da in dem Endbereich der Nockenwelle ohnehin eine Lagerstelle vorgesehen ist, kann die Zuführung des Öls von dem Kniestück in den Hauptölverteilkanal durch ein einfaches Anschließen des Kniestücks an das Kurbelgehäuse in dem Bereich der Lagerstelle erfolgen. Eine ausreichende Abdichtung des Eintritts erfolgt durch die Lagerstelle selbst.

In Weiterbildung der Erfindung zweigen Ölverteilkanäle von dem Hauptölverteilkanal ab, wobei die Abzweigungen in den Nockenwellenlagerstellen angeordnet sind. Diese Ausgestaltung stellt eine besonders vorteilhafte Lösung dar, da die einzelnen Lagerstellen ohnehin geschmiert werden müssen und dementsprechend eine Ölzufuhr und Ölverteilung zu diesen Lagerstellen erforderlich ist. Dabei ist in Weiterbildung der Erfindung in die Nockenwellenlagerfläche eine Ringnut eingearbeitet, die über zumindest eine Bohrung mit dem Hauptölverteilkanal verbunden ist. Damit ist im wesentlichen die Bohrung der einzige zusätzliche Bearbeitungsaufwand um das Öl von dem Hauptölverteilkanal in die ohnehin vorhandene Ringnut zu leiten und von dieser ggfs. weiter zu anderen Bauteilen.

Hierzu ist in Weiterbildung der Erfindung ein Ölverteilkanal direkt zu einem Kurbelwellenlager geführt. Da zwischen der Nockenwellenlagerfläche und der nächstliegenden Kurbelwellenlagerfläche aus Steifigkeitsgründen normalerweise ohnehin eine Kurbelgehäusewand vorgesehen ist, kann hier ein Ölverteilkanal ohne Probleme angeordnet werden.

In Weiterbildung der Erfindung zweigt von der Nockenwellenlagerfläche weiterhin ein Ölverteilkanal ab, der zu dem zugeordneten Zylinderkopfbereich geführt ist. Damit sind alle Ölverteilkanale an den Hauptölverteilkanal in konstruktiv einfacher Art und Weise angeschlossen. Dabei können von den zuvor erläuterten beiden Ölverteilkanälen ggfs. noch weitere Leitungen abzweigen, die zu zusätzlichen zu schmierenden oder zu kühlenden Bauteilen führen. So ist es beispielsweise vorgesehen, an dem Ölverteilkanal zu der Kurbelwellenlagerstelle eine Abzweigung vorzusehen, die Öl zur Kolbenkühlung gegen das Unterteil des Kolbenbodens spritzt. Gleichzeitig können von dem Ölverteilkanal zu dem zugeordneten Zylinderkopfbereich Abzweigungen abgehen, die zu den Rollenstößeln von Stoßstangen und Einspritzpumpenelementen führen.

In Weiterbildung der Erfindung ist die Nockenwelle aus Segmenten zusammengesetzt. Dieses ermöglicht eine rationelle Fertigung der Nockenwelle mit dem eingelassenen Hauptölverteilkanal, da entsprechend der ausgeführten Zylinderzahl der Brennkraftmaschine eine entsprechende Anzahl von Segmenten zusammengesetzt werden. Dabei sind in weiterer Ausgestaltung diese Segmente miteinander verschraubt oder durch eine hydraulisch bewirkte Preßverbindung miteinander verbunden. Bei der Verbindung mittels einer Preßverbindung ist dazu ein zusätzlicher Ringraum vorgesehen, in den ein Hydraulikfluid hineingepreßt wird und das eine Aufweitung des umgebenden Wandungsbereiches bewirkt. Durch diese Aufweitung wird die feste Verbindung von zwei Segmenten bewirkt.

In Weiterbildung der Erfindung ist eine Ölpumpe an der Öleintrittsseite in den Hauptölverteilkanal stirnseitig an dem Kurbelgehäuse befestigt und eine Ölansaugleitung mündet in die Ölwanne. Durch diese Ausbildung ist keine weitere Durchdringung des Kurbelgehäuse notwendig und die Ölpumpe kann auch für Wartungszwecke einfach erreichbar an der Kurbelgehäusestirnseite oder einem Kombinationsgehäuse befestigt werden. Zudem ist es leicht möglich, durch entsprechende Umschaltventile eine externe zweite Ölhilfspumpe anzuschließen, die beispielsweise bei einem Defekt der ersten Ölpumpe für eine Förderung des Schmieröls sorgt.

In Weiterbildung der Erfindung weist die Ölwanne einen Fortsatz zum Anschluß der Ölansauhleitung auf. Somit kann diese einfach von außen an der Ölwanne befestigt werden und bei einer Wartung oder Reparatur einfach ohne sonstige Demontagearbeiten gewechselt werden. Dabei ist in weiterer Ausgestaltung der Fortsatz mit einem von einem Ölsieb abgedeckten Einlauf in die Ölwanne versehen.

In Weiterbildung der Erfindung ist die Ölansaugleitung zumindest teilweise einstückig mit dem Kurbelgehäuse und/oder der Ölwanne und/oder einem die Ölpumpe tragenden Aggregateträger ausgebildet. Dadurch ergibt sich auch hier eine weitere Vereinfachung des Ölsystems, indem auf zusätzliche Leitungen in diesem Bereich verzichtet wird.

In Weiterbildung der Erfindung sind der Ölpumpe ein Druckbegrenzungsventil und ein Drucksteuerventil (Regel- und Überdruckventil) nachgeschaltet, wobei das Druckbegrenzungsventil und das Drucksteuerventil eine bauliche Einheit bilden. Durch diese Ausbildung ist die Störanfälligkeit dieser Bauteile weiter reduziert und bei einer Anordnung dieser baulichen Einheit an der Stirnseite der Brennkraftmaschine ist ein einfaches Austauschen ohne problematische Demontagearbeiten möglich.

In Weiterbildung der Erfindung weisen das Druckbegrenzungsventil und das Drucksteuerventil einen gemeinsamen Ventilkörper auf. Dadurch ist die Teilevielfalt reduziert.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Figur 1:: Eine Stirnansicht der erfindungsgemäßen Brennkraftmaschine,

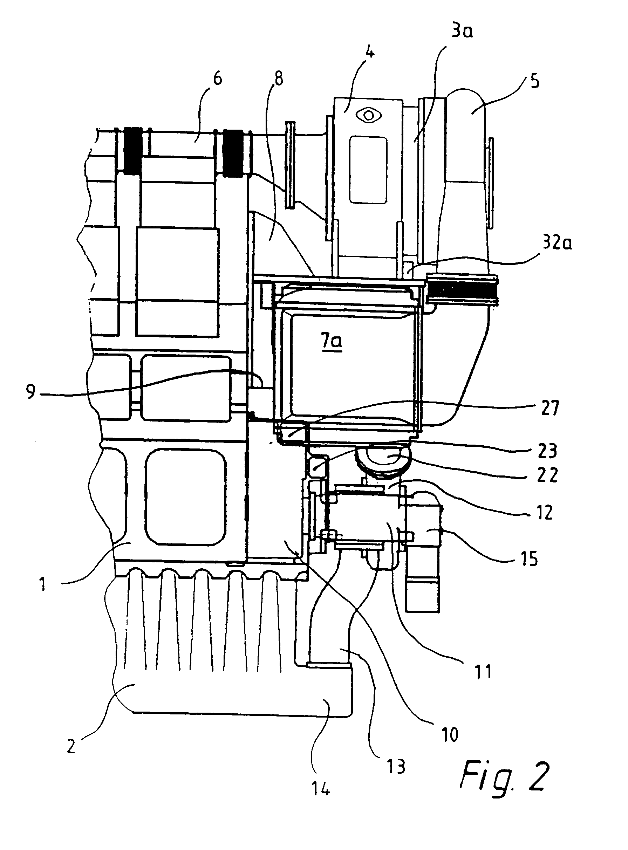

- Figur 2:: eine teilweise Seitenansicht der Stirnseite gemäß Figur 1,

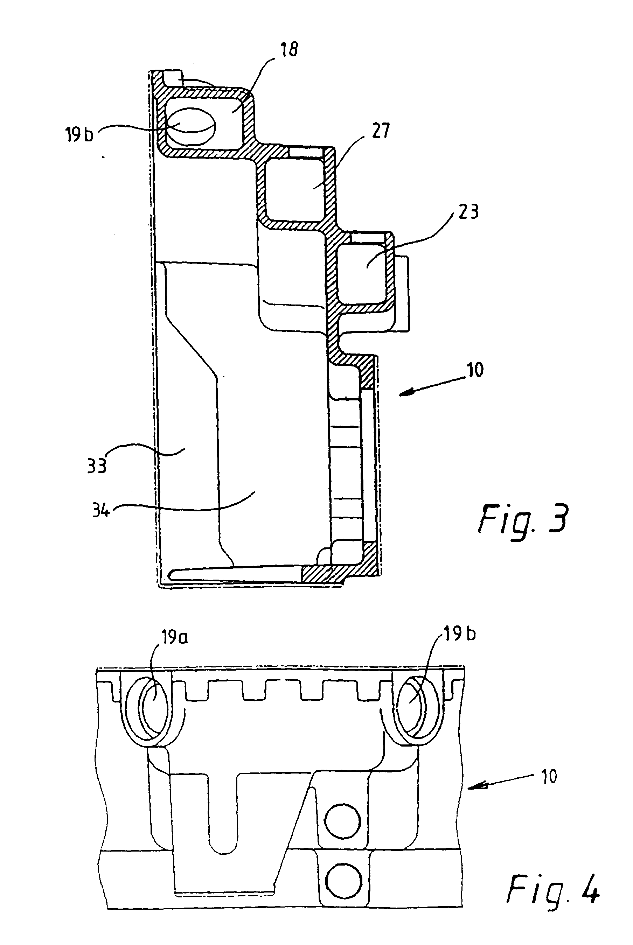

- Figur 3:: einen Querschnitt durch einen an der Stirnseite nach den Figuren 1 und 2 montierten Aaareaateträaer.
- Figur 4:: eine teilweise Draufsicht auf den Aggregateträger,

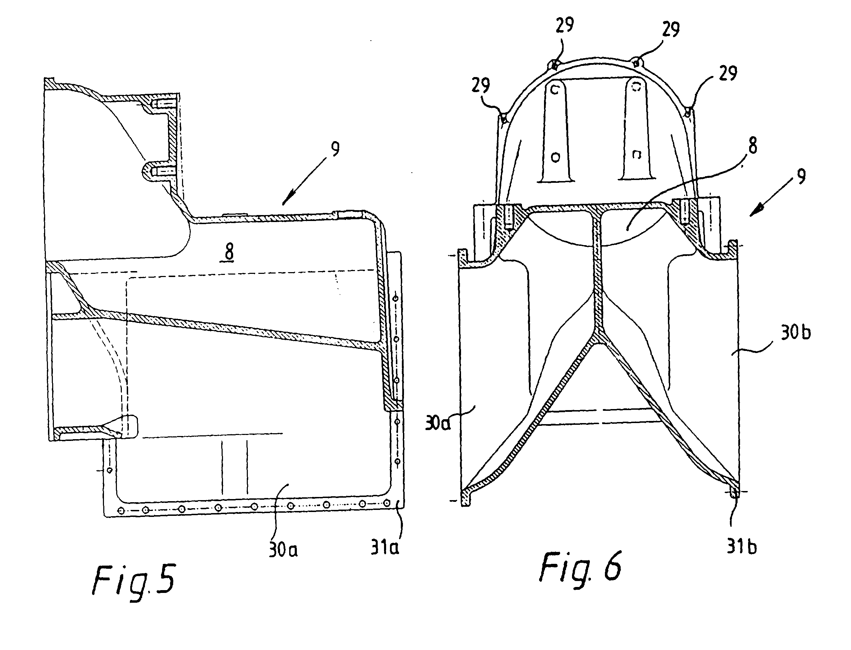

- Figur 5:: ein Längsschnitt durch einen oberhalb des Aggregateträgers montierten Kombinationsträger,
- Figur 6:: einen Querschnitt durch den Kombinationsträger,
- Figur 7:: eine teilweise Ansicht der Nockenwelle mit dem Hauptölverteilkanal und
- Figur 8:: eine teiweise Ansicht der Ölwanne mit dem Fortsatz.

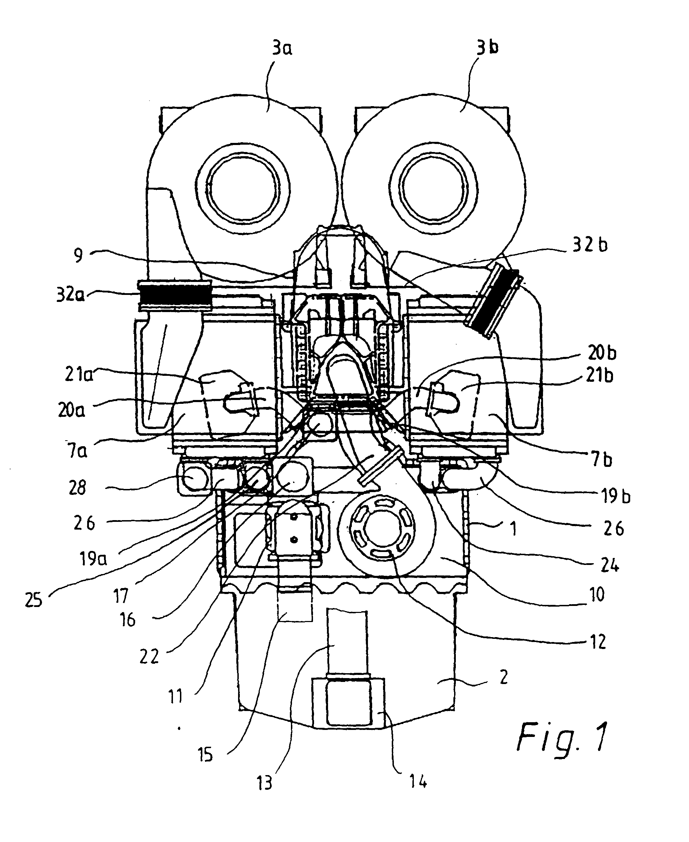

Die Brennkraftmaschine gemäß Figur 1 ist insbesondere eine 16-zylindrige V-Brennkraftmaschine mit vier Gaswechselventilen je Zylinder und einer zentralen Direkteinspritzung. Zudem ist die Brennkraftmaschine abgasturboaufgeladen und ladeluftgekühlt. Verwendet wird die Brennkraftmaschine beispielsweise zum Antrieb von Lokomotiven.

Die Brennkraftmaschine weist ein Kurbelgehäuse 1 auf, das nach unten von einer Ölwanne 2 verschlossen wird. Auf das Kurbelgehäuse 1 sind zwei Zylinderreihen mit je acht Zylindern aufgesetzt, wobei jeder Zylinderreihe ein Abgasturbolader 3a, 3b zugeordnet ist. Jeder Abgasturbolader 3a, 3b weist eine Turbine 4 und einen Lader 5 auf. Die Turbine 4 ist mit einer jeder Zylinderreihe zugeordneten Abgassammelleitung 6 verbunden. Die Abgassammelleitung 6 ist wiederrum aus einzelnen Elementen zusammengesetzt, wobei je ein Element einer Zylindereinheit zugeordnet ist. Der von der Turbine 4 angetriebene Lader 5 verdichtet die zugeführte Brennluft und fördert diese in Ladeluftkühler 7a, 7b. Diese Ladeluftkühler 7a, 7b weisen Ausläße auf, die in einen gemeinsamen Verbindungskanal 8 einmünden, der in einen Kombinationsträger 9 integriert ist, der gleichzeitig die Ladeluftkühler 7a, 7b trägt, bzw. an dem diese festgeschraubt sind. Der Verbindungskanal 8 mündet in eine Ladeluftleitung, die in dem V-Raum zwischen den beiden Zylinderreihen angeordnet ist. Unterhalb des Kombinationsträgers 9 ist ein Aggregateträger 10 montiert. An diesem Aggregateträger 10 sind extern eine Ölpumpe 11 und eine Kühlflüssigkeitspumpe 12 montiert. An die Ölpumpe 11 ist eine externe Ansaugleitung 13 angebracht, die in einen Saugrohranschluß 14 an der Ölwanne mündet. Die Ölpumpe 11 weist ein kombiniertes Regel- und Überdruckventil (Drucksteuerventil und Druckbegrenzungsventil) 15 auf, das gut zugänglich an der Vorderseite der Ölpumpe 11 montiert ist. Weiterhin weist die Ölpumpe 11 einen externen Druckanschluß 16 auf, der mit einem über eine Bypassleitung umgehbaren Ölwärmetauscher und einer Ölfiltereinrichtung verbunden ist. Damit können diese Bauteile problemlos im Umfeld der Brennkraftmaschine montiert werden. Das gekühlte und gereinigte Öl gelangt über eine Verbindungsleitung in einen Einlaßstutzen 17 in den Aggregateträger 10. Dieser Einlaßstutzen 17 ist mit einem Ölverteilkanal 18 verbunden, der beidseitig Anschlüße 19a, 19b aufweist. An diesen Anschlüssen 19a, 19b sind Ölverteilleitungen 20a, 20b angeschlossen, die das Öl zu den Hauptölverteilkanälen leiten. Die Verbindung zwischen den Ölverteilleitungen 20a, 20b und den Hauptölverteilkanälen, die im übrigen durch die hohl gearbeiteten Nockenwellen geführt sind, erfolgt über Anschlußstutzen 21a, 21b.

Die Kühlflüssigkeitspumpe 12 saugt die Kühlflüssigkeit, die im übrigen Wasser ohne Zusatz von Frostschutzmitteln ist, aus einem Wasserbehälter ggfs. unter nachfolgender Durchströmung eines Schmierölwärmetauschers an. von der Kühlflüssigkeitspumpe 12 wird die Kühlflüssigkeit in eine mit der Kühlflüssigkeitspumpe 12 verschraubte Druckleitung 22 gefördert, die mit einem Verteilkanal in dem Kurbelgehäuse 1 verbunden ist. Von diesem Verteilkanal gelangt die Kühlflüssigkeit direkt in die einzelnen Zylinderkühlräume und von diesen in die Kühlräume der einzelnen Zylinderköpfe. Von diesen wird die Kühlflüssigkeit an geodätisch höchster Stelle in eine Kühlflüssigkeitssammelleitung geführt, die die Kühlflüssigkeit wiederrum zu der Stirnseite gemäß Figur 1 der Brennkraftmaschine führt. Von dort gelangt die Kühlflüssigkeit entweder direkt oder bei Bedarf über zumindest einen Wärmetauscher in die Ladeluftkühler 7a, 7b, um von diesen wiederrum in den Wasserbehälter zu gelangen. In die Ladeluftkühler 7a, 7b gelangt die Kühlflüssigkeit über einen Kühlflüssigkeitsverteilkanal 23, der mit Rohrstutzen 24 verschraubt ist. Zudem weist einer der beiden Rohrstutzen 24 eine Öffnung 25 auf, die - wie zuvor ausgeführt - mit dem Gesamtkühlflüssigkeitskreislauf verbunden ist. Abgeführt wird die Kühlflüssigkeit von den Ladeluftkühlern 7a, 7b durch Verbindungsstücke 26 einerseits in einen Kühlflüssigkeitssammelkanal 27 durch den Aggregateträger 10, andererseits über einen Anschluß 28, der ebenfalls mit dem weiteren Kühlsystem verbunden ist. Durch diesen Anschluß 28 wird die Kühlflüssigkeit zurück in das Gesamtkühlsystem geführt. Im übrigen wird durch die dargestellte Durchströmung des Ladeluftkühlers 7a, 7b mit Ladeluft und Kühlflüssigkeit ein sogenanntes Gegenstromkühlprinzip verwirklicht.

Oberhalb des Aggregateträgers 10 ist wie schon ausgeführt ein separater Komnbinationsträger 9 direkt an der Ladeluftleitung befestigt. Dabei ist der Kombinationsträger 9 mit Trägerbohrungen 29 versehen, durch die Befestigungsschrauben durchgeführt und mit der Ladeluftleitung verschraubt werden können. In diese Ladeluftleitung mündest der Verbindungskanal 8, der in zwei Ladeluftleitungsanschlüße 30a, 30b mündet. Diese Ladeluftleitungsanschlüssen 30a, 30b weisen Befestigungsflansche 31a, 31b auf, an denen die Ladeluftkühler 7a, 7b befestigbar sind.

Oberhalb des Kombinationsträgers 9 bzw. der Ladeluftkühler 7a, 7b sind die Abgasturbolader 3a, 3b wiederrum auf separaten Trägern 32a, 32b befestigt. Diese Träger 32a, 32b sind wiederrum mit der Stirnseite der Brennkraftmaschine verschraubt.

In den Aggregateträger 10 ist weiterhin ein Schwingungsdämpfergehäuse 33 integriert. Dieses Schwingungsdämpfergehäuse 33 nimmt einen Schwingungsdämper auf, die direkt an der Kurbelwelle der Brennkraftmaschine befestigt ist. Dabei schließt an das Schwingungsdämpfergehäuse 33 ein Rädergehäuse 34 an, in dem die Zahnräder zum Antrieb der Ölpumpe 11 und der Kühlflüssigkeitspumpe 12 angeordnet sind, die beide von einem vor dem Schwingungsdämpfer auf der Kurbelwelle befestigten Zahnrad angetrieben werden.

Schließlich weist der Aggregateträger 10 noch seitliche Ölabscheideräume auf, die in Figur 1 hinter den Verbindungsstücken 26 liegen. Diese beiden Ölabscheideräume sind direkt mit dem Kurbelgehäuse 1 der Brennkraftmaschine verbunden und weisen Anschlüsse auf, an die jeweils eine Ölabscheideleitung angeschlossen werden kann. Diese Ölabscheideleitungen führen zu Beruhigungstöpfen, in denen sich in den. Gasen befindliches und mitgerissenes Öl absetzen kann, was dann wieder dem Ölkreislauf der Brennkraftmaschine zugeführt wird.

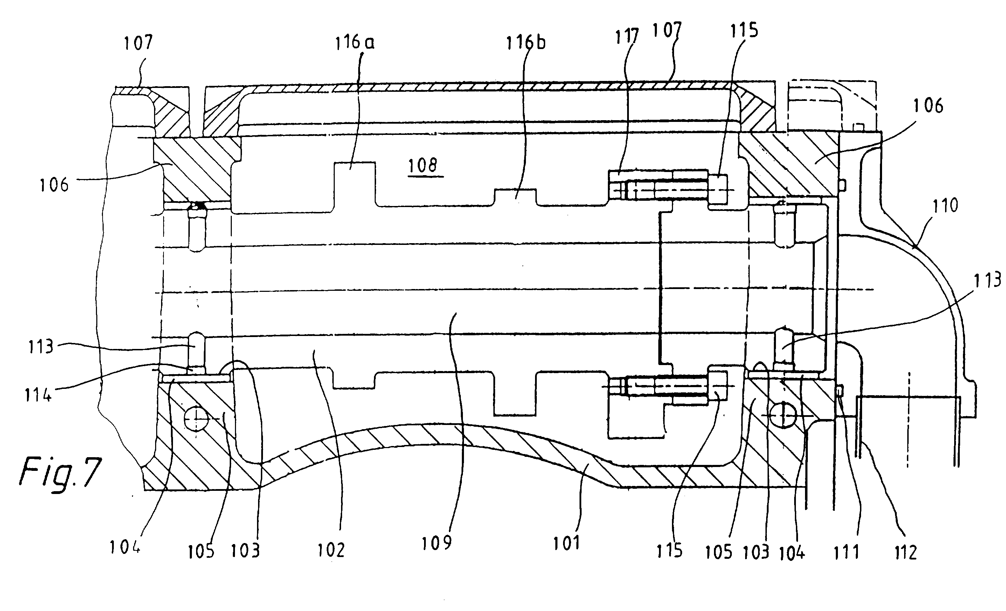

Die Figur 7 zeigt einen Ausschnitt aus dem erfindungsgemäßen Kurbelgehäuse 101. Dabei ist die Brennkraftmaschine als 16-zylindrige selbstzündende V-Brennkraftmaschine ausgebildet, wobei zwei Nockenwellen 102 entlang jeder V-Reihe der Brennkraftmaschine angeordnet sind.

Die Nockenwelle 102 weist Nockenwellenlagerstellen 103 auf, die unter Einfügung von Lagerschalen 104 in entsprechenden Lagerstühlen 105 des Kurbelgehäuses 101 gelagert sind. Mit den Lagerstühlen 105 sind Lagerdeckel 106 verschraubt, wobei auf die Lagerdeckel 106 und das sich direkt ohne Absatz anschließende Kurbelgehäuse Deckel 107 aufgesetzt sind, die den Nockenwellenraum 108 nach außen verschließen.

In die Nockenwelle 102 ist ein Hauptölverteilkanal 109 eingelassen, durch den das Schmier- und Kühlöl entlang der Brennkraftmaschinenlängsachse geführt und verteilt wird. Dazu ist stirnseitig des Kurbelgehäuses 101 ein Kniestück 110 an der Stirnseite des Kurbelgehäuses 101 unter Einfügung einer Dichtung 111 befestigt, wobei das Kniestück 110 in axialer Ausrichtung und Verlängerung zu dem Hauptölverteilkanal 109 angeordnet ist. An das Kniestück 110 ist ein Rohrstück 112 befestigt, durch daß das von der Ölpumpe geförderte Öl in das Kniestück 110 und weiter in den Hauptölverteilkanal 109 innerhalb der Nockenwelle 102 gefördert wird. Dabei ist der Übertritt von dem Kniestück in den Hauptölverteilkanal 109 nicht weiter abgedichtet. Eine weitgehende Abdichtung übernimmt an dieser Stelle die mit dem Lagerstuhl 105 unter Einbezug der Lagerschalen 104 und dem Lagerdeckel 106 zusammenwirkende Nockenwellenlagerstelle 103.

Das durch den Hauptölverteilkanal 109 geförderte Öl gelangt durch Bohrungen 113, die in die Nockenwelle 102 eingearbeitet sind, in Ringnuten 114, die entweder in die Nockenwellenlagerstelle 103 oder die Lagerschalen 104 eingearbeitet sind. Durch diese Bohrungen 113 gelangt folglich das Öl von dem Hauptölverteilkanal 109 einerseits zur Schmierung in die Nockenwellenlagerstellen 103, andererseits in nicht dargestellte Ölverteilkanäle, von denen es weiter zu den einzelnen Kurbelwellenlagern und zu den jeweils zugeordneten Zylinderkopfbereichen geführt wird.

Die Nockenwelle 102 des Ausführungsbeispiels ist im übrigen aus einzelnen Segmenten zusammengesetzt, wobei die Segmente durch Schrauben 115 miteinander verbunden sind. Dabei befinden sich zwischen zwei Nockenwellenlagerstellen 103 im übrigen zwei Nocken 116a, 116b zur Betätigung der Gaswechselventile und ein Nocken 117 zur Betätigung eines Einspritzpumpenelementes.

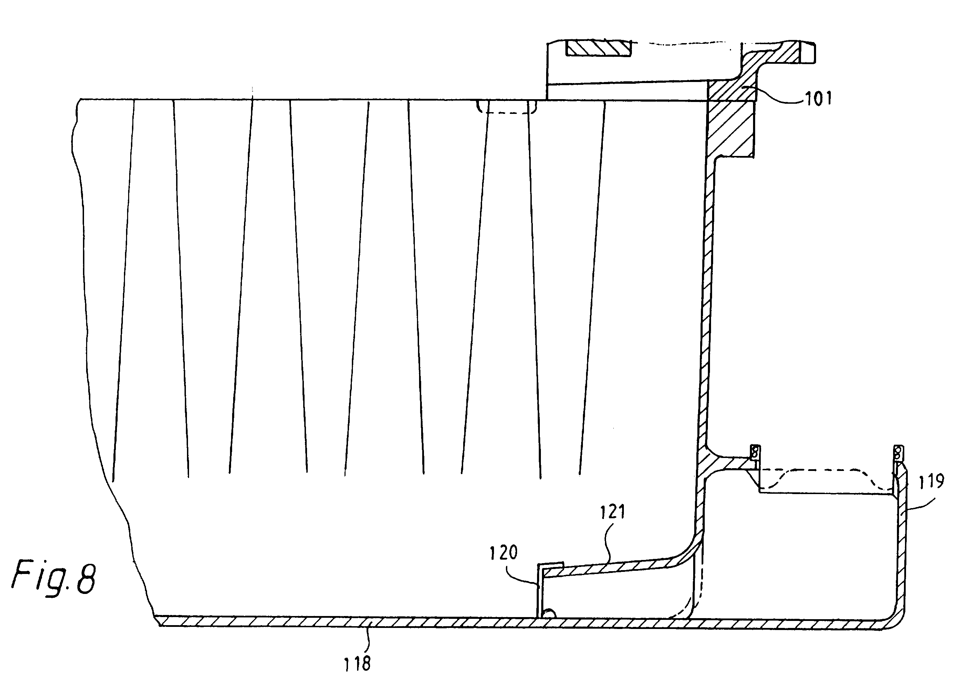

Die in Fig. 8 dargestellte Ölwanne 118 weist einen Fortsatz 119 auf, an dem zumindest eine Ansaugleitung zu einer Ölpumpe befestigt wird.Dabei weist der Fortsatz 119 einen im Innern der Ölwanne 118 mündenden Einlauf 121 auf, der von einem Ölsieb 120 verschlossen ist.

## Patentansprüche

1. Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder bewegbar ist, wobei an der der Schwungradseite der Brennkraftmaschine gegenüberliegenden Stirnseite ein Aggregateträger (10) angeordnet ist, der eine Kühlflüssigkeitspumpe (12) und eine Ölpumpe (11) trägt,
*dadurch gekennzeichnet,* daß die Kühlflüssigkeitspumpe (12) und die Ölpumpe (11) extern an dem Aggregateträger (10) angeordnet sind, so daß eine direkte Zugänglichkeit zur Wartung der Pumpen (11, 12) erreicht wird, daß die Antriebsräder der Pumpen (11, 12) durch Öffnungen in dem Aggregateträger (10) in dessen Innenraum hineingeführt sind, und daß in dem Aggregateträger (10) zumindest ein Ölverteilkanal (18) und ein Kühlflüssigkeitsverteilkanal (23) angeordnet sind.

2. Brennkraftmaschine nach Anspruch 1,
*dadurch gekennzeichnet,* daß an der Ölpumpe (11) eine externe Ansaugleitung (13) angeschlossen ist, die in einen Saugrohranschluß (14, 119) an einer Ölwanne (2, 118) mündet.

3. Brennkraftmaschine nach Anspruch 1 oder 2,
*dadurch gekennzeichnet,* daß die Ölpumpe (11) einen externen Druckanschluß (16) aufweist, der mit einem über eine Bypassleitung umgehbaren Ölwärmetauscher und einer Ölfiltereinrichtung verbunden ist, wobei die Ölfiltereinrichtung über eine Verbindungsleitung mit einem Einlaßstutzen (17) an dem Aggregateträger (10) verbunden ist.

4. Brennkraftmaschine nach einem der vorherigen Ansprüche,
*dadurch gekennzeichnet,* daß der Ölverteilkanal (18) Anschlüße (19a, 19b) für Ölverteilleitungen (20a, 112, 20b, 112) zu Hauptölverteilkanälen (109) in der Brennkraftmaschine aufweist.

5. Brennkraftmaschine nach einem der vorherigen Ansprüche,
*dadurch gekennzeichnet,* daß in den Aggregateträger (10) zumindest ein Ölabscheideraum integriert ist.

6. Brennkraftmaschine nach einem der vorherigen Ansprüche,
*dadurch gekennzeichnet,* daß der Ölabscheideraum zumindest einen Anschluß für eine Ölabscheideleitung aufweist.

7. Brennkraftmaschine nach einem der vorherigen Ansprüche,
*dadurch gekennzeichnet,* daß in dem Aggregateträger (10) ein Schwingungsdämpfergehäuse (33) integriert ist.

8. Brennkraftmaschine nach einem der vorherigen Ansprüche,
*dadurch gekennzeichnet,* daß die Kühlflüssigkeitspumpe (12) mit einer Druckleitung (22) verbunden ist, die mit einem Hauptverteilkanal in der Brennkraftmaschine verbunden ist.

9. Brennkraftmaschine nach einem der vorherigen Ansprüche,
*dadurch gekennzeichnet,* daß der Kühlflüssigkeitsverteilkanal (23) zumindest einen Auslaß aufweist, der über einen Rohrstutzen (24) mit einem Ladeluftkühlereinlaß verbunden ist.

10. Brennkraftmaschine nach einem der vorherigen Ansprüche,
*dadurch gekennzeichnet,* daß in den Aggregateträger (10) ein Kühlflüssigkeitssammelkanal (27) mit zumindest einem Einlaß angeordnet ist, der über ein Verbindungsstück (26) mit einem Ladeluftkühlauslaß verbunden ist.

11. Brennkraftmaschine nach einem der vorherigen Ansprüche,
*dadurch gekennzeichnet,* daß dem Aggregateträger (10) ein Kombinationsträger (9) benachbart ist, der zumindest einen Ladeluftkühler trägt.

12. Brennkraftmaschine nach einem der vorherigen Ansprüche,
*dadurch gekennzeichnet,* daß in den Kombinationsträger (9) zumindest ein Verbindungskanal (8) zwischen Ladeluftkühler (7a, 7b) und der Brennkraftmaschine integriert ist.

13. Brennkraftmaschine nach einem der vorherigen Ansprüche,
*dadurch gekennzeichnet,* daß die in dem Zylinderkopf eingesetzten Gaswechselventile über Stoßstangen und Kipphebel von Nocken einer Nockenwelle betätigbar sind, und wobei ein Ölsystem vorhanden ist, das über Leitungen und Kanäle Öl zu zu schmierenden und zu kühlenden Teilen der Brennkraftmaschine leitet, und daß ein Hauptölverteilkanal (109) entlang einer Zylinderreihe der Brennkraftmaschine durch die hohl gearbeitete Nockenwelle (102) verläuft.

14. Brennkraftmaschine nach einem der vorherigen Ansprüche,
*dadurch gekennzeichnet,* daß der Öleintritt in den Hauptölverteilkanal (109) stirnseitig der Nockenwelle (102) erfolgt und daß die Eintrittsseite die der Nockenwellenantriebsseite gegenüberliegende Seite ist.

15. Brennkraftmaschine nach einem der vorherigen Ansprüche,
*dadurch gekennzeichnet,* daß Ölverteilkanäle von dem Hauptölverteilkanal (109) abzweigen, wobei die Abzweigungen in den Nockenwellenlagerstellen (103) angeordnet sind.

16. Brennkraftmaschine nach einem der vorherigen Ansprüche,
*dadurch gekennzeichnet,* daß in die Nockenwellenlagerfläche (103) eine Ringnut (114) eingearbeitet ist, die über zumindest eine Bohrung (113) mit dem Hauptölverteilkanal (109) verbunden ist.

17. Brennkraftmaschine nach einem der vorherigen Ansprüche,
*dadurch gekennzeichnet,* daß ein Ölverteilkanal direkt zu einem Kurbelwellenlager geführt ist.

18. Brennkraftmaschine nach einem der vorherigen Ansprüche,
*dadurch gekennzeichnet,* daß ein Ölverteilkanal zu dem zugeordneten Zylinderkopfbereich geführt ist.

19. Brennkraftmaschine nach einem der vorherigen Ansprüche,
*dadurch gekennzeichnet,* daß die Nockenwelle (102) aus Segmenten zusammengesetzt ist.

20. Brennkraftmaschine nach einem der vorherigen Ansprüche,
*dadurch gekennzeichnet,* daß die Segmente miteinander verschraubt sind.

21. Brennkraftmaschine nach einem der vorherigen Ansprüche,
*dadurch gekennzeichnet,* daß die Segmente durch eine hydraulisch bewirkte Preßverbindung miteinander verbunden sind.

22. Brennkraftmaschine nach einem der vorherigen Ansprüche,
*dadurch gekennzeichnet,* daß eine Ölpumpe (11) an der Öleintrittsseite in den Hauptölverteilkanal (109) stirnseitig an dem Kurbelgehäuse (1, 101) und/oder einem die Ölpumpe (11) tragenden Aggregateträger (10) befestigt ist und daß eine Ölansaugleitung (13) in die Ölwanne (2, 118) mündet.

23. Brennkraftmaschine nach einem der vorherigen Ansprüche,
*dadurch gekennzeichnet,* daß die Ölwanne (2, 118) einen Fortsatz (14, 119) zum Anschluß der Ölansaugleitung (13) aufweist.

24. Brennkraftmaschine nach einem der vorherigen Ansprüche,
*dadurch gekennzeichnet,* daß der Fortsatz (14, 119) einen von einem Ölsieb (120) abgedeckten Einlauf (121) in die Ölwanne (2, 118) aufweist.

25. Brennkraftmaschine nach einem der vorherigen Ansprüche,
*dadurch gekennzeichnet,* daß die Ölansaugleitung (13) zumindest teilweise einstückig mit dem Kurbelgehäuse (1, 101) und/oder der Ölwanne (2, 118) und/oder einem die Ölpumpe (11) tragenden Kombinationsträger (9) verbunden ist und als Stütze für die Ölpumpe (11) dient.

26. Brennkraftmaschine nach einem der vorherigen Ansprüche,
*dadurch gekennzeichnet,* daß der Ölpumpe (11) ein Druckbegrenzungsventil (15) und ein Drucksteuerventil (15) nachgeschaltet sind, wobei das Druckbegrenzungsventil (15) und das Drucksteuerventil (15) eine bauliche Einheit bilden.

27. Brennkraftmaschine nach einem der vorherigen Ansprüche,
*dadurch gekennzeichnet,* daß das Druckbegrenzungsventil (15) und das Drucksteuerventil (15) einen gemeinsamen Ventilkörper aufweisen.

## Claims

1. An internal combustion engine with a crankcase, in which a crankshaft is rotatably mounted, to which at least one connecting rod is articulated, which bears a piston that can undergo movement in a cylinder covered by a cylinder head, wherein an assembly support (10) is arranged on the front face lying opposite the flywheel side of the internal combustion engine and bears a coolant pump (12) and an oil pump (11),
**characterised in that** the coolant pump (12) and the oil pump (11) are arranged externally on the assembly support (10), enabling direct access for maintenance of the pumps (11, 12), that the drive gears of the pumps (11, 12) are introduced into the interior of the assembly support (10) through openings in it and that at least one oil distribution channel (18) and one coolant distribution channel (23) are arranged in the assembly support (10).

2. An internal combustion engine according to claim 1,
**characterised in that** an external suction line (13) is connected to the oil pump (11) and opens unto a suction pipe connection (14, 119) on an oil sump (2, 118).

3. An internal combustion engine according to claim 1 or 2,
**characterised in that** the oil pump ( 1 1 ) has an external pressure connection (16) which is connected to an oil heat exchanger, which can be bypassed via a bypass line, and an oil filtering device, wherein the oil filtering device is connected via a connecting line to an inlet socket (17) on the assembly support (10).

4. An internal combustion engine according to any one of the preceding claims,
**characterised in that** the oil distribution channel (18) has connections (19a, 19b) for oil distribution lines (20a, 112, 20b, 112) to main oil distribution channels (109) in the internal combustion engine.

5. An internal combustion engine according to any one of the preceding claims,
**characterised in that** at least one oil separation chamber is integrated into the assembly support (10).

6. An internal combustion engine according to any one of the preceding claims,
**characterised in that** the oil separation chamber has at least one connection for an oil separation line.

7. An internal combustion engine according to any one of the preceding claims,
**characterised in that** a vibration damper housing (33) is integrated into the assembly support (10).

8. An internal combustion engine according to any one of the preceding claims,
**characterised in that** the coolant pump (12) is connected to a pressure line (22) which is connected to a main [oil] distribution channel in the internal combustion engine.

9. An internal combustion engine according to any one of the preceding claims,
**characterised in that** the coolant distribution channel (23) has at least one outlet which is connected to a charge-air cooler inlet via a pipe socket (24).

10. An internal combustion engine according to any one of the preceding claims,
**characterised in that** a coolant collection channel (27) with at least one inlet is arranged in the assembly support (10) and is connected to the charge-air cooling outlet via a connecting piece (26).

11. An internal combustion engine according to any one of the preceding claims,
**characterised in that** a combination support (9) is arranged next to the assembly support (10) and bears at least one charge-air cooler.

12. An internal combustion engine according to any one of the preceding claims,
**characterised in that** at least one connecting channel (8) is integrated into the combination support (9) between the charge-air cooler (7a, 7b) and the internal combustion engine.

13. An internal combustion engine according to any one of the preceding claims,
**characterised in that** the gas change valves inserted in the cylinder head can be actuated via push rods and rocker arms by the cams of a camshaft and wherein an oil system is provided which carries oil via lines and channels to the parts of the internal combustion engine to be lubricated and cooled and that a main oil distribution channel (109) extends along a cylinder bank of the internal combustion engine through the hollow worked camshaft (102).

14. An internal combustion engine according to any one of the preceding claims,
**characterised in that** oil enters the main oil distribution channel (109) on the face of the camshaft (102) and that the entry side is the side lying opposite the camshaft drive side.

15. An internal combustion engine according to any one of the preceding claims,
**characterised in that** oil distribution channels branch from the main oil distribution channel (109), with the branches arranged in the camshaft bearing positions (103).

16. An internal combustion engine according to any one of the preceding claims,
**characterised in that** an annular groove (114) is worked into the camshaft bearing surface (103) and is connected via at least one through-hole (113) to the main oil distribution channel (109).

17. An internal combustion engine according to any one of the preceding claims,
**characterised in that** one oil distribution channel leads directly to one camshaft bearing.

18. An internal combustion engine according to any one of the preceding claims,
**characterised in that** one oil distribution channel leads to the assigned cylinder head region.

19. An internal combustion engine according to any one of the preceding claims,
**characterised in that** the camshaft (102) is comprised of segments.

20. An internal combustion engine according to any one of the preceding claims,
**characterised in that** the segments are bolted to one another.

21. An internal combustion engine according to any one of the preceding claims,
**characterised in that** the segments are joined together through a hydraulic compression joint.

22. An internal combustion engine according to any one of the preceding claims,
**characterised in that** an oil pump (11) in the main oil distribution channel (109) is secured on the front face to the crankcase (1, 101) and/or an assembly support (10) bearing the oil pump ( 1 1 ) and that an oil suction line (13) opens into the oil sump (2, 118).

23. An internal combustion engine according to any one of the preceding claims,
**characterised in that** the oil sump (2, 118) has an extension (14, 119) for connection of the oil suction line (13).

24. An internal combustion engine according to any one of the preceding claims,
**characterised in that** the extension (14, 1 19) has an inlet (121), covered by an oil sieve (120), into the oil sump (2, 118).

25. An internal combustion engine according to any one of the preceding claims,
**characterised in that** the oil suction line (13) is connected at least partially as one piece to the crankcase (1, 101) and/or the oil sump (2, 118) and/or a combination support (9) bearing the oil pump ( 1 1 ) and serves as a support for the oil pump (11).

26. An internal combustion engine according to any one of the preceding claims,
**characterised in that** a pressure limiting valve (15) and a pressure control valve (15) are arranged in series with the oil pump (11), with the pressure limiting valve (15) and the pressure control valve (15) forming a single construction unit.

27. An internal combustion engine according to any one of the preceding claims,
**characterised in that** the pressure limiting valve (15) and the pressure control valve (15) have a common valve body.

## Revendications

1. Moteur à combustion interne avec un carter de vilebrequin, dans lequel est monté de façon à pouvoir tourner un arbre de vilebrequin, sur lequel est articulé au moins une bielle, qui porte un piston, qui peut être déplacé dans un cylindre recouvert par une culasse, un support d'agrégats (10) étant disposé sur la face frontale qui est opposée au côté du volant d'inertie du moteur à combustion interne, support d'agrégats (10) qui porte une pompe de liquide de refroidissement (12) et une pompe à huile (11),
caractérisé en ce que
• la pompe de liquide de refroidissement (12) et la pompe à huile (11) sont disposées de façon externe sur le support d'agrégats (10), de telle sorte que l'on obtienne une accessibilité directe pour la maintenance des pompes (11, 12),
• on fait passer les roues d'entraînement des pompes (11, 12) à travers des orifices dans le support d'agrégats (10) à l'intérieur de celui-ci, et
• on dispose dans le support d'agrégats (10) au moins un canal de distribution d'huile (18) et un canal de distribution de liquide de refroidissement (23).

2. Moteur à combustion interne selon la revendication 1,
caractérisé en ce qu'
on raccorde à la pompe à huile (11) une conduite externe d'aspiration (13), qui débouche dans un raccord de tuyau d'aspiration (14, 119) sur une cuve d'huile (2, 118).

3. Moteur à combustion interne, selon la revendication 1 ou 2,
caractérisé en ce que
la pompe à huile (11) présente un raccord externe de pression (16), qui est relié à un échangeur de chaleur de l'huile, que l'on peut contourner au moyen d'une conduite en dérivation et d'un dispositif de filtration de l'huile, le dispositif de filtration de l'huile étant relié au moyen d'une conduite de liaison à un ajutage d'entrée (17) sur le support d'agrégats (10).

4. Moteur à combustion interne, selon l'une des revendications précédentes,
caractérisé en ce que
le canal de distribution d'huile (18) présente des raccords (19a, 19b) pour les conduites de distribution de l'huile (20a, 112, 20b, 112) qui vont aux canaux principaux de distribution de l'huile (109) dans le moteur à combustion interne.

5. Moteur à combustion interne, selon l'une des revendications précédentes,
caractérisé en ce que
l'on intègre dans le support d'agrégats (10) au moins une chambre de séparateur d'huile.

6. Moteur à combustion interne, selon l'une des revendications précédentes,
caractérisé en ce que
la chambre de séparateur d'huile présente au moins un raccord pour une conduite de séparation de l'huile.

7. Moteur à combustion interne, selon l'une des revendications précédentes,
caractérisé en ce que
dans le support d'agrégats (10) on intègre un carter d'amortisseur de vibrations (33).

8. Moteur à combustion interne, selon l'une des revendications précédentes,
caractérisé en ce que
la pompe de liquide de refroidissement (12) est reliée à une conduite sous pression (22), qui est reliée à un canal principal de distribution dans le moteur à combustion interne.

9. Moteur à combustion interne, selon l'une des revendications précédentes,
caractérisé en ce que
le canal de distribution du liquide de refroidissement (23) présente au moins une sortie qui est reliée par un ajutage tubulaire (24) à une entrée de refroidisseur de l'air de la charge.

10. Moteur à combustion interne, selon l'une des revendications précédentes,
caractérisé en ce que
dans le support d'agrégats (10) on dispose un canal collecteur de liquide de refroidissement (27) avec au moins une entrée, qui est reliée par une pièce de liaison (26) avec une sortie de refroidisseur d'air de la charge.

11. Moteur à combustion interne, selon l'une des revendications précédentes,
caractérisé en ce qu'
on met au voisinage du support d'agrégats(10) un support de combinaison (9), qui porte au moins un refroidisseur de l'air de la charge.

12. Moteur à combustion interne, selon l'une des revendications précédentes,
caractérisé en ce que
dans le support de combinaison (9) on intègre au moins un canal de liaison (8) entre le refroidisseur de l'air de la charge (7a, 7b) et le moteur à combustion interne.

13. Moteur à combustion interne, selon l'une des revendications précédentes,
caractérisé en ce que
• les soupapes d'admission et d'échappement qui sont montées dans la culasse peuvent être actionnées au moyen de tiges de poussoir et de culbuteurs de cames par un arbre à cames,
• il y a un système d'huile qui amène l'huile par des conduites et par des canaux aux parties du moteur à combustion interne à lubrifier et à refroidir, et
• un canal principal de distribution d'huile (109) s'étend le long d'une ligne de cylindres du moteur à combustion interne à travers l'arbre à cames (102) usine en creux.

14. Moteur à combustion interne, selon l'une des revendications précédentes,
caractérisé en ce que
• l'entrée de l'huile dans le canal principal de distribution de l'huile (109) a lieu du côté frontal de l'arbre à cames (102), et
• le côté de l'entrée est le côté opposé au côté de l'entraînement des arbres à cames

15. Moteur à combustion interne, selon l'une des revendications précédentes,
caractérisé en ce que
les canaux de distribution de l'huile partent en dérivation à partir du canal principal de distribution de l'huile (109), les dérivations étant disposées dans les points d'appui (103) des arbres à cames.

16. Moteur à combustion interne, selon l'une des revendications précédentes,
caractérisé en ce que
dans la surface d'appui (103) d'arbres à cames est usinée une rainure annulaire (14), qui est reliée au moyen d'au moins un alésage (113) au canal principal de distribution de l'huile (109).

17. Moteur à combustion interne, selon l'une des revendications précédentes,
caractérisé en ce qu'
on amène un canal de distribution de l'huile directement à un palier d'arbre à cames.

18. Moteur à combustion interne, selon l'une des revendications précédentes,
caractérisé en ce qu'
on amène un canal de distribution de l'huile à la zone associée de la culasse.

19. Moteur à combustion interne, selon l'une des revendications précédentes,
caractérisé en ce que
l'arbre à cames (102) est composé de segments.

20. Moteur à combustion interne, selon l'une des revendications précédentes,
caractérisé en ce que
les segments sont visés les uns aux autres.

21. Moteur à combustion interne, selon l'une des revendications précédentes,
caractérisé en ce que
les segments sont reliés les uns aux autres par une liaison à la presse ajustée réalisée de façon hydraulique.

22. Moteur à combustion interne, selon l'une des revendications précédentes,
caractérisé en ce qu'
• on fixe une pompe à huile (11) sur le côté de l'entrée de l'huile dans le canal principal de distribution de l'huile (109) sur le carter de vilebrequin (1, 101) et/ou un support d'agrégats (10), qui porte la pompe à huile (11), et
• une conduite d'aspiration d'huile (13) débouche dans la cuve d'huile (2, 118)

23. Moteur à combustion interne, selon l'une des revendications précédentes,
caractérisé en ce que
la cuve d'huile (2, 118) présente un prolongement (14, 119) qui sert à raccorder la conduite d'aspiration de l'huile (13).

24. Moteur à combustion interne, selon l'une des revendications précédentes,
caractérisé en ce que
le prolongement (14, 119) présente une entrée (121) dans la cuve d'huile (2, 118) qui est recouverte par un tamis pour l'huile (120).

25. Moteur à combustion interne, selon l'une des revendications précédentes,
caractérisé en ce que
la conduite d'aspiration de l'huile (13) est reliée au moins en partie d'une seule pièce au carter de vilebrequin (1, 101) et/ou à la cuve d'huile (2/118) et/ou à un support de combinaison (9) qui porte la pompe à huile (11) et sert de soutien pour la pompe à huile (11).

26. Moteur à combustion interne selon l'une des revendications précédentes,
caractérisé en ce qu'
une vanne de limitation de la pression (15) et une vanne de commande de la pression (15) sont montées en aval de la pompe à huile (11), la vanne de limitation de la pression (15) et la vanne de la commande de la pression (15)formant une unité de construction.

27. Moteur à combustion interne selon l'une des revendications précédentes,
caractérisé en ce que
la vanne de limitation de la pression (15) et la vanne de commande de la pression (15) présentant un corps de vanne commun.
